# EUROPEAN PATENT SPECIFICATION

(11) **EP 2 859 389 B1**
(45) Date of publication and mention of the grant of the patent: **01.11.2017**
(21) Application number: 13744820.5
(22) Date of filing: 11.06.2013
(51) Int. Cl.: G01W 1/10, G06Q 10/04

(54) **SHORT- TO LONG-TERM TEMPERATURE FORECASTING SYSTEM FOR THE PRODUCTION, MANAGEMENT AND SALE OF ENERGY RESOURCES**
KURZ- BIS LANGFRISTIGES TEMPERATURVORHERSAGESYSTEM FÜR HERSTELLUNG, VERWALTUNG UND VERKAUF VON ENERGIERESSOURCEN
SYSTÈME DE PRÉVISION DE TEMPÉRATURE DU COURT AU LONG TERME POUR LA PRODUCTION, LA GESTION ET LA VENTE DE RESSOURCES ÉNERGÉTIQUES

(30) Priority: 12.06.2012 IT MI20121023
(43) Date of publication of application: 15.04.2015
(73) Proprietor: ENI S.p.A., 00144 Rome (IT)
(72) Inventor: GIUNTA, Giuseppe, I-20097 San Donato Milanese (MI) (IT); SALERNO, Raffaele, I-10023 Chieri (TO) (IT)
(74) Representative: Branca, Emanuela
(86) International application number: PCT/IB2013/054780
(87) International publication number: WO 2013/186703

(56) References cited:
- WO-A1-2012/080944
- Dietrich Heimann ET AL: "Statistical-dynamical downscaling", , 19 April 2002 (2002-04-19), pages 1-7, XP055005818, Retrieved from the Internet: URL:http://www.pa.op.dlr.de/climate/sdr.ht ml [retrieved on 2011-08-30]
- U. Fuentes ET AL: "An Improved Statistical-Dynamical Downscaling Scheme and its Application to the Alpine Precipitation Climatology", Theorical and Applied Climatology, 65, 1 January 2000 (2000-01-01), pages 119-135, XP055005820, Retrieved from the Internet: URL:http://www.pa.op.dlr.de/climate/pub6.p df [retrieved on 2011-08-30]
- Udo Busch ET AL: "Statistical-dynamical extrapolation of a nested regional climate simulation", CLIMATE RESEARCH, Vol. 19, 22 November 2001 (2001-11-22), pages 1-13, XP055005821, Retrieved from the Internet: URL:http://www.int-res.com/articles/cr2002 /19/c019p001.pdf [retrieved on 2011-08-30]
- BURTON A ET AL: "Downscaling transient climate change using a NeymanScott Rectangular Pulses stochastic rainfall model", JOURNAL OF HYDROLOGY, NORTH-HOLLAND, AMSTERDAM, NL, vol. 381, no. 1-2, 5 February 2010 (2010-02-05), pages 18-32, XP026853958, ISSN: 0022-1694 [retrieved on 2009-11-01]
- MELVIN B COMISAROW: "Signal modeling for ion cyclotron resonance", JOURNAL OF CHEMICAL PHYSICS, AMERICAN INSTITUTE OF PHYSICS, NEW YORK, NY, US, vol. 69, no. 9, 1 November 1978 (1978-11-01), pages 4097-4104, XP008142077, ISSN: 0021-9606
- TORILL ENGEN-SKAUGEN: "Refinement of dynamically downscaled precipitation and temperature scenarios", CLIMATIC CHANGE, KLUWER ACADEMIC PUBLISHERS, DO, vol. 84, no. 3-4, 27 April 2007 (2007-04-27), pages 365-382, XP019525427, ISSN: 1573-1480, DOI: 10.1007/S10584-007-9251-6
- L. RUBY LEUNG ET AL: "Regional Climate Research", BULLETIN OF THE AMERICAN METEOROLOGICAL SOCIETY, vol. 84, no. 1, 1 January 2003 (2003-01-01), pages 89-95, XP055005835, ISSN: 0003-0007, DOI: 10.1175/BAMS-84-1-89
- F. Giorgi ET AL: "Regional Climate Information - Evaluation and Projections", , 1 January 2001 (2001-01-01), XP055005832, Retrieved from the Internet: URL:http://www.grida.no/climate/ipcc_tar/w g1/pdf/TAR-10.PDF [retrieved on 2011-08-30]

## Description

The present invention relates to a continuous weather-climate temperature forecasting method and system, from short to long term, which can be used, in particular but not exclusively, for managing energy resources and for the logistic planning and construction of industrial sites and plants.

Numerical long-term weather-climate forecasting models (60-90 days) on a regional or global scale provide an alternative to statistical systems deriving from the analysis of historical data. These models are based on a dynamic approach to the forecasting of temperature, rain and other weather-climate variables. Numerical models have been used for many years mainly for short-term weather forecasting (1-5 days) with an increasing degree of reliability.

The regional scale is defined, for the purposes illustrated herein, as being between about 10⁴ km² and about 10⁷ km². The upper limit (about 10⁷ km²) is the sub-continental scale at which climatic inhomogeneity can be diffused in various parts of the world. What happens beyond this upper limit, i.e. on a planetary scale, is dominated by processes and interactions connected to general circulation. The lower limit (about 10⁴ km²), on the contrary, represents the border between the regional and local scale. In more recent years it has been demonstrated that these models also have a certain predictive capacity on time scales in the order of seasons (3-6 months) (Kumar et al., 1996; Zwiers, 1996; Barnston et al., 1999; Mason et al., 1999; Goddard et al., 2001; Palmer et al., 2004). Seasonal forecasts of an experimental nature have been produced since the nineties' of the last century in various international institutions.

For an effective application of forecasts of a seasonal nature it is required that significant information be available on a regional and local scale. It is also well-known that the models are the main instrument for the analysis of climatic changes and the progress of future scenarios. These models offer computer simulations of the climate which include basic characteristics of the physics and dynamics of the atmosphere and take into account the interactions between the different components (atmosphere, oceans, earth, ice, biosphere). The most advanced systems so far simulate the climate on the whole planet, by coupling the atmosphere with what happens in the oceans (Atmosphere-Ocean General Circulation Models, AOGCM).

The horizontal resolution, i.e. the distance between the points on which the model effects its calculations, typically ranges from 50 to 250 km. Within these models, the physical processes which take place on a smaller spatial scale with respect to the resolution of the model, are treated through suitable algorithms, generally called parameterizations.

AOGCMs provide a good description of the climate on ampler spatial scales than their horizontal resolution, but they cannot provide a detailed description of the climatic variables under current conditions, nor detailed projections relating to variations in the same on smaller scales than the resolution itself. In recent years, an increase in the resolution of the models on a global scale has also allowed an availability of information on a regional scale. In spite of this, most of the models used in seasonal forecasts still have a deficiency in the spatial resolution, which does not allow realistic values of the weather-climatic variables to be obtained. In particular, the predictability of the temperature can be limited, as this variable is particularly sensitive to the complexity of the territory and detail with which it is described.

In recent years, models on a regional scale or with a limited area have been used for long-term forecasts, by inserting them in global models to produce regional and local weather-climatic information. These models can take into account important local factors, such as, for example, the influence of orography. In this way, they are consistent and capable of providing significant responses to a wide range of physical parameters. These models are based on the same fundamentals as high-resolution models for meteorological forecasts, such as those provided by the Epson Meteo Center (CEM). High-resolution models have been used within CEM for the last 15 years for producing meteorological information on a global scale. In 2002, an experimental activity was launched for the production of seasonal forecasts based on a so-called two-tiered approach. This approach is characterized in that the boundary conditions, such as Sea-Surface Temperature (SST), are forecasted and used as a forcing element of the overlying atmosphere. The SST can be obtained from the climatological temperatures on the basis of the anomaly present at the starting moment, and also completely predicted by an AOGCM model. Discussion of regional simulations can be found in the following documents:
Dietrich Heimann et al: "Statistical-dynamical downscaling", 19 April 2002, pages 1-7;
U. Fuentes et al: "An Improved Statistical-Dynamical Downscaling Scheme and its Application to the Alpine Precipitation Climatology",Theorical and Applied Climatology, 65, 1 January 2000, pages 119-135;
Udo Busch et al: "Statistical-dynamical extrapolation of a nested regional climate simulation",CLIMATE RESEARCH, Vol. 19, 22 November 2001, pages 1-13

An objective of the present invention therefore relates to providing a weather-climate forecasting method and system of the temperature within a timeframe ranging from one to ninety days, which can solve the main deficiencies mentioned above of the known art in an extremely simple, economical and particularly functional manner.

More specifically, an objective of the present invention is to provide a short- to seasonal-term weather-climate forecasting method and system, which can allow the management and evaluation of natural gas reserves, in addition to the acquisition and sales phases of the same, with particular interest in a European, national and macro-regional scale.

Another objective of the present invention is to provide a method and a system for the weather-climate forecasting of the temperature, from short to long term, which is capable of allowing an accurate estimation of the production of electric energy obtained by the use of natural gas, with an improvement in the energy efficiency of the plants and a reduction in the unbalance in the transportation grid generated by the difference between the demand and the offer of electric energy in the national and European market (*"smart grid"*).

A further objective of the present invention is to provide a method and system for the weather-climate forecasting of the temperature, from short to long term, which allows an optimized management of industrial production processes, with an advance forecasting of the market trends for the production and supply of oil, refined products and natural gas (*"smart transportation and shipping"*).

Another objective of the present invention is to provide a method and system for the weather-climate forecasting of the temperature, from short to long term, which allows the management of the trading, transport and storage of oil and refined products, with an advance forecasting of industrial and civil consumptions and storages for the logistic of service stations (*"smart stations"*)*.*

Yet another objective of the present invention is to provide a method and system for the weather-climate forecasting of the temperature, short-medium-long term, which allows a more efficient management of worksites for the transportation of materials and personnel, exploration in off-shore areas, the construction of industrial plants or pipelines in any geographical area.

Seasonal weather-climate forecasting must be faced as a continuous short- to long-term process (*seamless prediction* concept). A coupled "atmosphere - oceans - earth - ice" system shows a wide range of physical and dynamic phenomena associated with physical and biochemical reactions. These form a continuous combination in which the space-time variability is exerted. The boundary between the weather conditions and the climate is completely artificial and, as such, tends to inhibit interactions between the components of the physical system.

The climate on a global scale, in fact, influences the environment as a whole, on a micro-scale and mesoscale level. This influence in turn regulates the atmospheric weather and local climate. Furthermore, small-scale processes have a significant impact on the evolution of large-scale circulation and on the interactions between the different components of the climatic system.

The central point of the method and system according to the invention therefore consists in the prediction, on a space-time scale, of this "continuous combination" and interactions between the different components of the physical system. The *seamless prediction* concept therefore becomes the explicit paradigm for acknowledging the importance and benefits in converging the methods and technologies used in the field of weather and climate forecasting. A particular consideration should be dedicated to the initialization of the climatic system, as every phenomenon, from those on an hourly scale to those on a weekly scale, benefit from an accurate definition of the initial conditions of the whole climatic system.

The development of a unified approach to forecasting, which eliminates the gap between the forecasting of a short-time weather event and seasonal variations, starts by unifying the activities of seasonal forecasting and so-called *ensemble* methods. The term *"seasonal forecasting"* refers to a forecast which covers a period of time from 30 to 90 days (season). The word *"ensemble"* means a combination of the simulations effected by a mathematical weather forecasting model. Each simulation (run) uses a set of data consisting of weather variables provided by measurement systems of atmospheric data on a global scale, for example weather stations, satellites, etc.. The number of runs which form the ensemble varies and is equal to the number of perturbations applied to the initial values observed, with which the same model is initialized. The approach must include a procedure which implies the use of several mathematical models and/or the use of various physical and dynamic schemes (*multi-model*)*.*

The multi-model approach is necessary as the models are simplified and imperfect, and therefore the result of the use of various dynamic and physical systems is higher, in principle, than the perturbations of the initial conditions of a single model.

The multi-model approach therefore represents a simple and consistent way for disturbing the physics and dynamics in weather forecasting. Through the multi-model perturbation approach of the starting state, a stronger and more effective forecast system is obtained. Furthermore, by verifying the hypotheses on more than one model, it is possible to verify which result is independent of the model itself and therefore probably more reliable.

In this context, short-term forecasting based on the same ensemble and multi-model modelling is inserted in the present application. The objective is to use temperature forecasting for forecasting gas and electricity consumptions and for forecasting the production of electricity in combined cycle power plants by the combustion of natural gas.

The weather-climate forecasting required by the electric market is oriented towards the range of one to ten days. The temperature forecast in this time period can also be applied to forecasting the electric load in relation to the geographical distribution and power demand of the electricity grid operator. The planning of electric production in industrial sites can also use medium-long-term weather forecasting also for planning maintenance operations.

Interactions on the different space-time scales are the dominating feature of all aspects of weather-climate forecasting. The prediction of any climatic anomaly on a region is only complete by effectively evaluating the effects of seas, land, vegetation and stratospheric processes. Furthermore, seasonal forecasting requires that the models be capable of providing a realistic representation of the fluctuations of the atmospheric weather day-by-day. These fluctuations modify the statistical correlation on a local scale and therefore they must be taken into account in the changes of the system which alter their prediction. The combination of atmospheric weather and climate in a single aspect implies the use of realistic models which include interactions between the components of the weather-climatic system and which, at the same time, are capable of predicting the main anomalies of the weather-climatic parameters and weather day-by-day.

Even if there are well-documented reasons at the basis of the use of various approaches between atmospheric weather and climate (Barry et al. 2009), the division in a strict sense represents a limitation. In a short-term forecast, the deterministic evolution of the weather is a problem linked to the values used for initializing the model. For timeframes on a climatological scale, on the other hand, the statistics of the atmospheric systems is the most important element.

In seasonal forecasting, however, the interaction between the various components of the weather-climatic system represents the fundamental element and paradigm of forecasting itself which ranges from short to long term. The importance and considerable benefit in the convergence of the methods used in weather forecasts and climate forecasts, can be clearly acknowledged, as the combination of the variabilities are considered in a continuous process within the whole seasonal range.

The characteristics and advantages of a short-medium-long-term weather-climate forecasting method and system which can be used in particular but not exclusively for the management of energy resources and for the planning and construction of work-sites and industrial plants, according to the present invention, will appear more evident from the following illustrative and non-limiting description, referring to the enclosed schematic drawings, in which:

figure 1 is a pictorial diagram illustrating the interactions between the processes used for determining the weather parameters in the weather-climate forecasting method and system according to the invention;

figure 2 is a synthetic scheme illustrating the flow of the interaction process between global scale and regional scale in relation to the *down-scaling* and construction forecasting system used in the weather-climate forecasting method and system according to the invention;

figure 3 is a block scheme illustrating the phases and main components of the weather-climate forecasting method and system according to the invention;

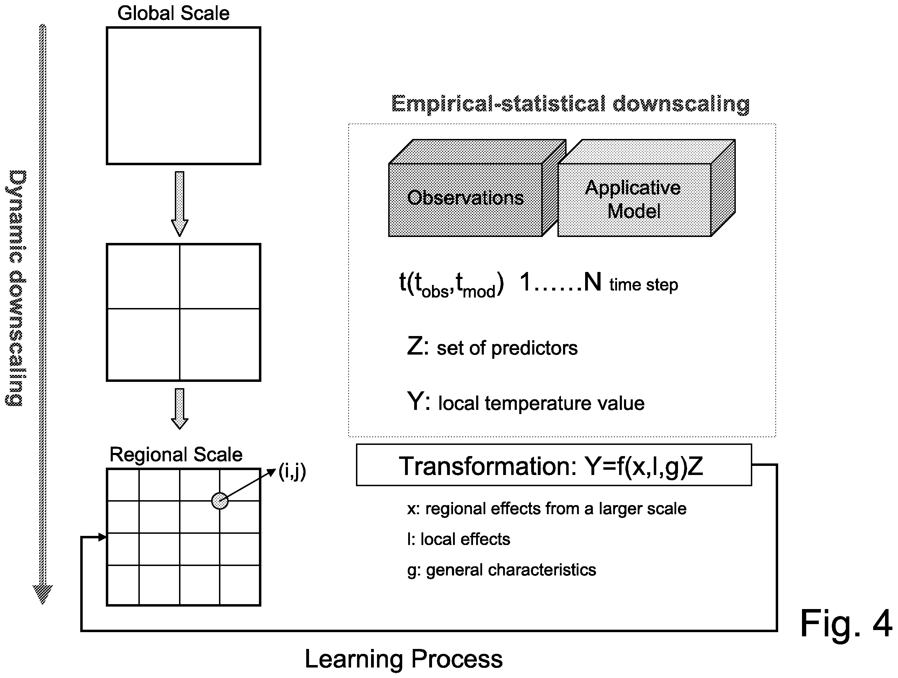

figure 4 illustrates the procedures of an applicative model which introduces, within the final domain and during the dynamic down-scaling phase, a set of meteorological parameters close to the ground, deriving from a statistical scaling, these meteorological parameters being re-assimilated in the regional model or area and acting on a scale compatible with that of the regional model itself;

figures 5 and 6 are graphs showing two different forecast examples of the maximum temperature, obtained during certain time periods and in certain geographical areas, wherein the forecasts obtained according to the method of the invention (lines with rhombuses) are respectively compared with the temperatures observed (lines with triangles) and with the climatic averages over 25 years (lines with squares) in addition to bringing the confidence range back to 80% (dotted lines);

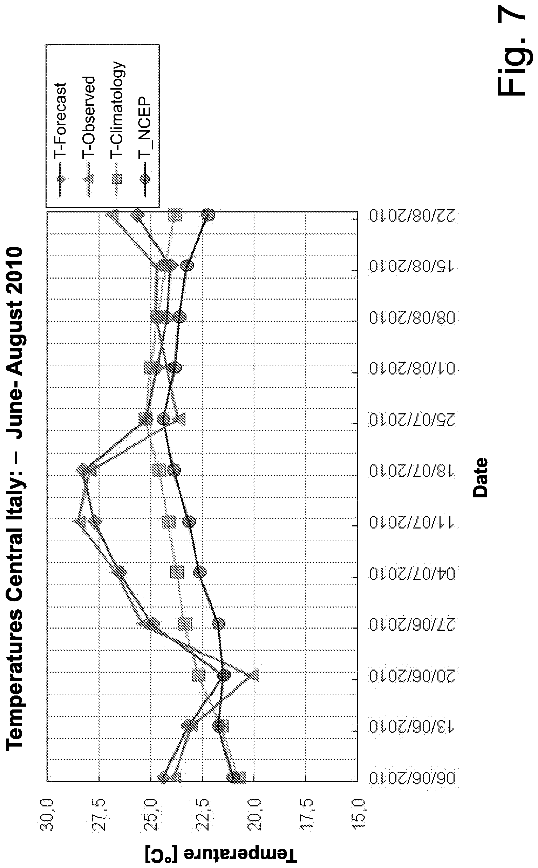

Figure 7 is a graph showing an example of a seasonal forecast of the average temperature obtained within a certain time period and in a certain geographical area, wherein the forecasts obtained by means of the method of the present invention (lines and rhombuses) are respectively compared with the temperatures actually observed (lines with triangles), with the climate averages over 25 years (lines with squares) and with the temperature forecasts obtained by the NCEP-NOAA (*"National Center for Environmental Prediction-National Oceanic and Atmospheric Administration",* U.S.A.), through the *Climate Forecast System* model (lines with circles);

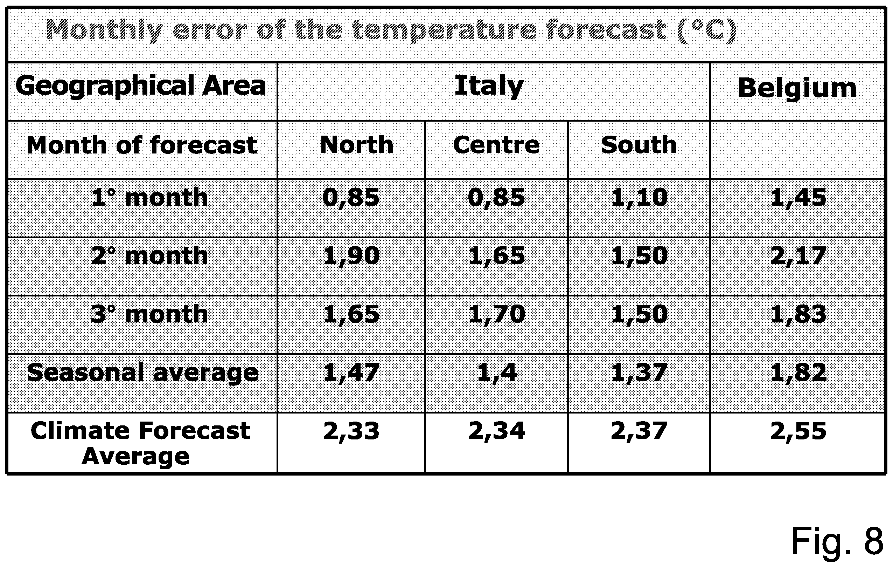

figure 8 shows the overall statistic analysis over 3 years of the monthly error of temperature forecasts, obtained by means of the method according to the invention, for a time span and on different macro-regions of Italy and Belgium, with a comparison with the climate forecast on a seasonal scale;

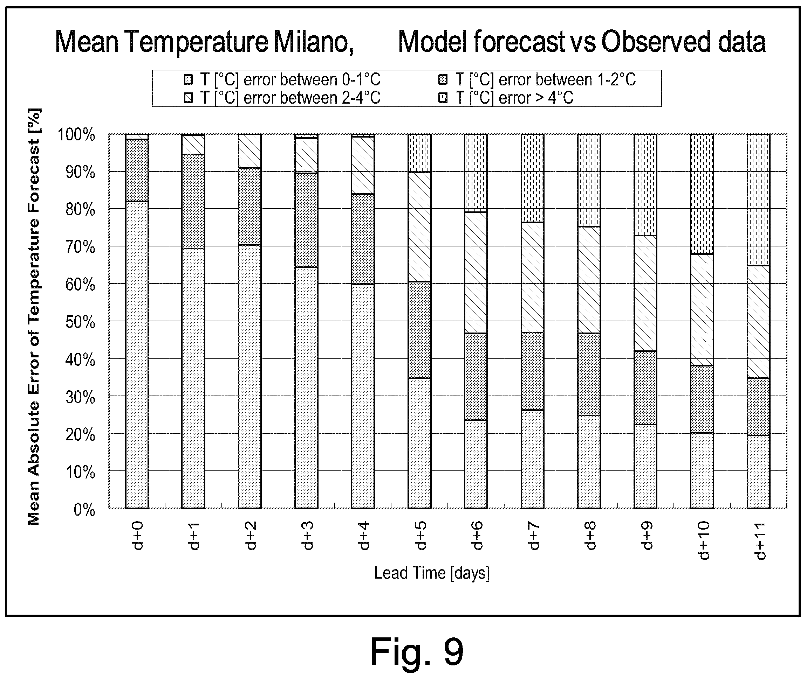

figure 9 is a diagram showing one short-medium forecast example of the mean daily absolute error of temperature forecasts versus observed data at different lead times, wherein the forecasts obtained according to the method of the invention, for one year (2012) period span and on Italian city; and

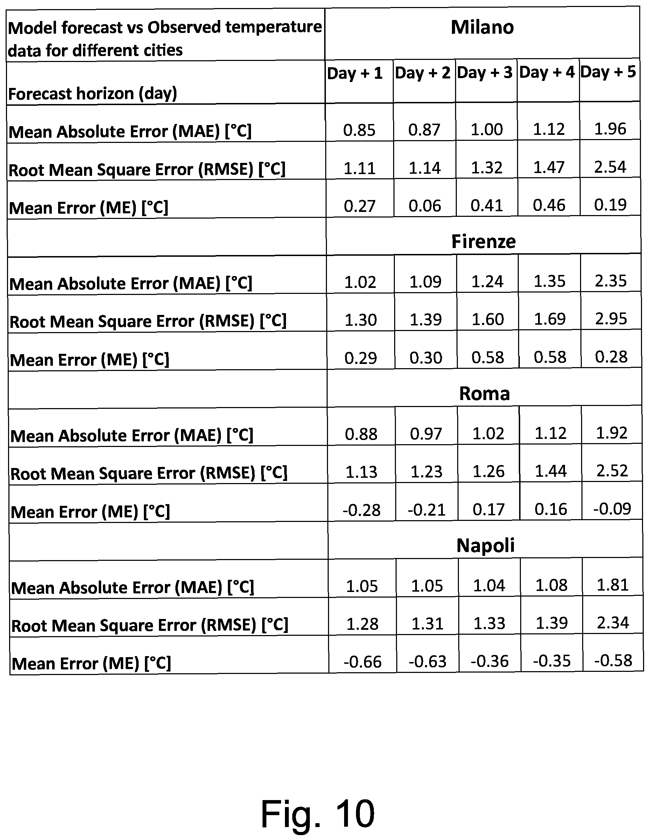

figure 10 shows the overall statistic analysis for short-term temperature forecasts at different lead times, of the mean daily absolute error of temperature forecasts versus observed data, obtained by means of the method according to the invention, for one year (2012) time span and on different Italian cities.

The continuous weather-climate forecasting method, from short to seasonal term, according to the invention is based on the composition of the forecasts and on the application to the geographical macro-areas of interest using an innovative down-scaling system. The term "down-scaling" means a process for the determination of local meteorological parameters, starting from parameters available on a larger geographical scale. In the method according to the invention the set of simulations is generated starting from the perturbation of the initial atmospheric conditions, using global and regional models. This allows the development of the weather-climate forecast in a probabilistic sense.

In short, the short-medium-long term weather-climate forecasting method according to the invention:
- combines dynamic systems and statistical systems through a newly conceived applicative model, which exceeds any other system currently in use and which adds a statistic scaling of the data for temperatures close to the ground, which are therefore re-assimilated in the regional model or area as new temperature values close to the physical boundary (the ground);
- combines the application of the time tendency to seasonal forecasting on a global scale according to the *end-to-end* approach (observation, prediction, application and decision), which forms one of the basic elements of the invention;
- uses a new *ensemble down-scaling* method for providing a short-, medium- and long-term (seasonal) weather-climate forecast. The expression *ensemble down-scaling* means the application of the *down-scaling* process (statistical and dynamic) to each simulation (run) effected by the models on a global scale.

Two phases were implemented, and subsequently integrated with each other, for the simulation and weather-climate forecasting on a regional scale:
- the first phase envisages the use of models with a limited area, with a grid step size ranging from 1 km to 20 km and typically in the order of 10 km, and the boundary conditions provided by the ensemble on a global scale;
- the second phase envisages the use of empirical-statistical models for the connection between the local weather-climatic characteristics and conditions on a regional scale.

The two phases were joined and applied simultaneously to the various members of the ensemble, so as to create a *statistical-dynamic ensemble down-scaling* so as to maintain the continuity (seamless prediction) on the time scale from one to ninety days and on the space scale from the single point to a sub-regional macro-area according to what is specified hereunder.

The climate of a region is determined by the interaction between the processes and circulatory elements which take place on a global, regional and local scale respectively and within a wide time range which varies from hours to weeks (Zhang et. Al., 2006). Processes which regulate the general circulation of the atmosphere belong to the planetary scale. These are the elements which determine the sequence and type of meteorological events-regimes which characterize the climate of a region.

Within the planetary scale, the local and regional effects modulate the spatial and time structure of the regional climatic signals, causing effects which, in turn, are capable of conditioning the characteristics of the general circulation. Furthermore, the climatic variability of a region can be strongly influenced, through so-called teleconnections, by anomalies present in distant regions, which complicate the evaluation of climatic variations on a regional scale. These anomalies are characterized by different time scales and high non-linearities.

According to the invention, the use is envisaged of a multi-scale approach for determining the processes which regulate changes in climate on a regional scale. At the beginning of the process, there is the ensemble on atmosphere-ocean models, capable of reproducing the weather-climatic system with forcing elements on a planetary scale and the variability associated with induced anomalies on a large scale. The information which can be obtained is enriched, through the statistical-dynamic *ensemble down-scaling* method of the processes on a regional and local scale.

In the *ensemble down-scaling* method, a selection process of each meteorological parameter of a *super-ensemble* is applied, for each time period, through a measurement based on the distance between suitably selected reference values. This measurement is used for excluding all values outside the range. The overall value is then re-calculated on the residual meteorological parameters, whereas the confidence range is based on the limits of the sub-ensemble obtained. The term *super-ensemble* means the combination of the simulations obtained from two (or more) weather forecasting models. In the case of the present invention, the *super-ensemble* consists of two simulation models on a global scale and the selection procedure of the results is applied to these, but can be extended to any combination of models available.

In this way, it is possible:
- to evaluate the variability associated with transient weather events, in particular extreme events;
- to define the predictability and limits of the forecast within a season;
- to define the confidence range in order to determine the uncertainty degree;
- to provide a better support for the decision thanks to a high-resolution modelization system which allows a prediction of the weather and climate to be obtained with continuity, containing a procedure which links surface processes with physical and dynamical processes of the weather-climatic system.

The role of high-resolution forcing agents has been clearly demonstrated in numerous studies (among which, Noguer et al., 1998). These studies have demonstrated that the simulation capacity of the mesoscale component of the climatic signal is only modestly sensitive to the quality of the fundamental datum.

The importance of the ground and surface interactions on long-term simulations has also been demonstrated in numerous works in literature. The impact of the use of physical variables characteristic of the ground and its changes on the climate on a regional scale has also been defined in various studies carried out in the past (among others, Pan et al., 1999; Pielke et al., 1999; Chase et al., 2000; Zang X., 2006). These characteristics are directly connected to the prediction of the phenomenon, as shown by the studies carried out at the Epson Meteo Centre on the Indian and Himalayan region, with respect to the interaction between the ground and the atmosphere.

The prediction of the temperature near the ground, a central result of the method according to the invention, can greatly benefit from the improvement in the description of surface parameters. For this reason, according to the invention, the creation of an advanced database of climatic parameters has been envisaged, to which surface parameters and the relative anomalies can refer.

The specific feature of the method according to the invention lies in the combined use of a global model, for the simulation of large-scale effects, and a regional model, to take into account characteristics on a lower scale, taking into consideration forcing elements in the regional scale and incorporating the statistical representation with an innovative procedure.

Competing techniques, known in literature, which also use dynamic *down-scaling* statistical methods, are normally applied for climate forecasts and not for a continuous period from one to ninety days. The method according to the invention fills this gap, by joining the two mentioned elements for seasonal forecasting through a specifically conceived applicative model. The dynamic-statistical *down-scaling* procedure is in fact normally based on the assumption that any situation on a regional scale is associated with a specific distribution of groups of atmospheric weather determined on a large scale. The distributions of the occurrence frequencies of these groups derive from an analysis over many years of the weather conditions deriving from large-scale (SG) simulations. Simulations on a regional scale are made for each of the groups of atmospheric weather identified, and can be statistically evaluated by weighting them in relation to the occurrence frequency, so that the most frequent situations have a higher relative weight with respect to the less common ones. The regional models would require, per se, information such as the boundary conditions, which would depend on the same scale of belonging and therefore the usual dynamic *down-scaling* (or dynamic-statistical) procedures do not satisfy this condition.

In order to reduce this weakness of the known art, the applicative model in the method according to the invention adds a statistical scaling of the data for temperatures close to the ground which are therefore re-assimilated in the regional model or area as new temperature values close to the physical boundary (the ground or surface) of the regional area. In this way, during the dynamic *down-scaling* phase, a range of "pseudo-observations" is, de facto, introduced, which acts on a scale compatible with that of the regional area. Furthermore, continuity is guaranteed between short, medium, long term through the procedures introduced at the level of the models and at the correlation and filter level of the results for the temperatures, with the objective of being applied to the management of energy resources. A first filter mechanism acts as a device which allows the passage of the frequencies within an assigned range and relating to the various meteorological parameters of the dynamic and thermal type. The amplitude of the range is automatically determined by the regional scale of application. The filter is therefore directly connected to the dynamic-statistic down-scaling procedure as it specifically depends on the dimension of the statistical scaling. A second filter mechanism acts on the basis of the fact that the down-scaling process should be independent of the dimension of the domain. The second filter mechanism is then applied to the waves on a larger scale and to the averages on that area.

The method according to the invention therefore proposes the innovation of the ensemble down-scaling procedure which combines the statistical technique with the dynamical technique through an application layer capable of providing a weather-climate forecast of the temperature (continuous short-long term forecast) for direct use in the decisional process, also providing confidence of the prediction. In this way, the end-user avails of useful information for undertaking actions correlated to the objectives proposed, in particular:
- exploring possible options for evaluating alternative decisions based on the probability of specific climatic events;
- comparatively evaluating alternatives in relation to the objectives of the business.

In this way, it is possible to obtain an economic evaluation of the weather-climate forecast and identify potentially anomalous situations.

More specifically, the short-medium-long term weather-climate forecasting method and system according to the present invention proposes to:
- improve the description of the physical elements in the mathematical models used in weather-climatic simulations, in order to increase the performances of the same models;
- apply *multi-model ensemble* methods for optimizing the simulations obtained from the single models, per se incomplete;
- create a statistical classification on the weather-climatic data registered in the last 30 years of the physical variables calculated by the models, in order to refine the prediction of temperature on a regional scale.

In general, weather-climate forecasting needs to improve the statistical representation of the movements on a synoptic and sub-synoptic scale, without artificial limits between short-, medium- and long-term forecasting, and represent the interaction of these with the global climatic system. If the initial conditions are forgotten by the system with time, on the other hand, they enormously influence short- and medium-term phenomena (undulations) which normally belong to the time scale in the order of days. These high-frequency undulations are also indirectly propagated on wider time scales and influence what is happening on a large scale, revealing the link between atmospheric weather and climate.

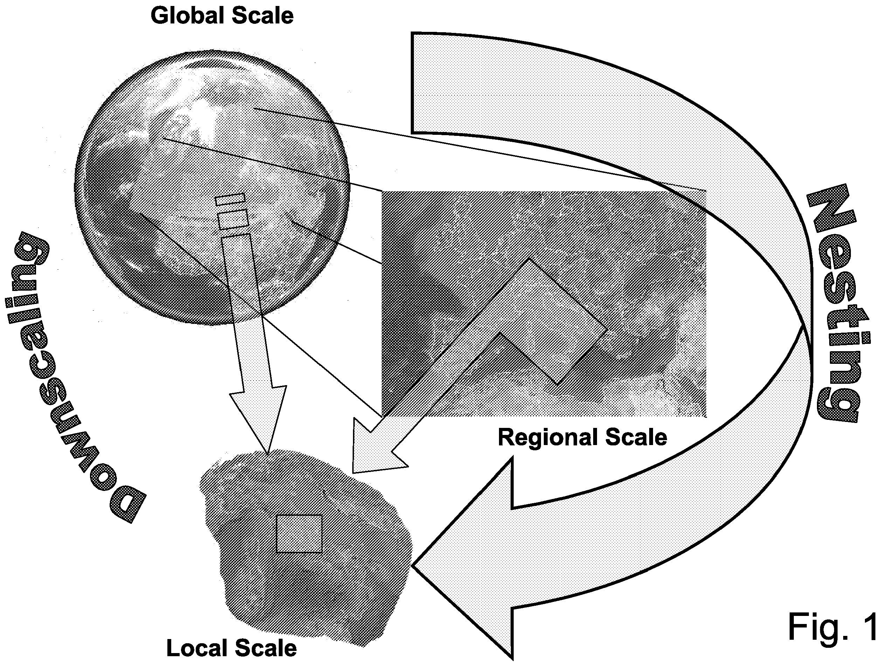

In the method according to the invention, regional models are used for dynamically producing an analysis of the high-resolution atmosphere and for solving particular problems which cannot be solved on a large scale. With the use of the dynamic down-scaling method, all the details on a local scale are simulated without a knowledge of direct values within the regional domain (figure 1). The dynamic down-scaling method maintains the large-scale elements, resolved by the global model, and adds information on a reduced scale that the global model is not capable of solving.

The regional model must not alter the solution on a large scale: long false waves can develop, however, in the interior due to the effect of systematic errors. These waves interfere with the shorter waves, distorting the regional circulation and having an impact on physical processes by distorting the fields of the atmospheric variables (for example, temperature, pressure, etc.). Numerous regional models predict the fields within their domain without knowing the large-scale characteristics solved by the global model, except in the area close to the side boundary. The interior of the large-scale domain consequently does not know anything about the small-scale domain.

The information at the boundary of the small-scale domain (provided by the large-scale model) propagates into the large-scale domain, transferring the large-scale information to the interior. This takes place through a process with consecutive steps (figure 1). This process, however, creates systematic errors in the regional domain. To avoid this, according to the invention, a *"dynamic perturbation"* method is adopted. In short, as shown in figure 1, the geographical field or area on which the weather forecast is effected, is divided into a base part or area, which comes from the global scale (SG), and into an area or regional scale (SR). This area or regional scale (SR) is defined as the difference between the global scale (SG) and the base part. The model calculates the tendencies of climatic variations on a regional scale (SR) for each atmospheric variable as the differences between the tendencies of the overall field and those of the base part. Thanks to a filter mechanism, also new, the waves having a greater length with respect to those on a regional scale (SR), are filtered so that everything that takes place on larger scale remains unaltered. This filter mechanism is based on the fact that a down-scaling process should be independent of the dimension of the domain and therefore the filter mechanism is applied to waves on a larger scale and to the averages on the area.

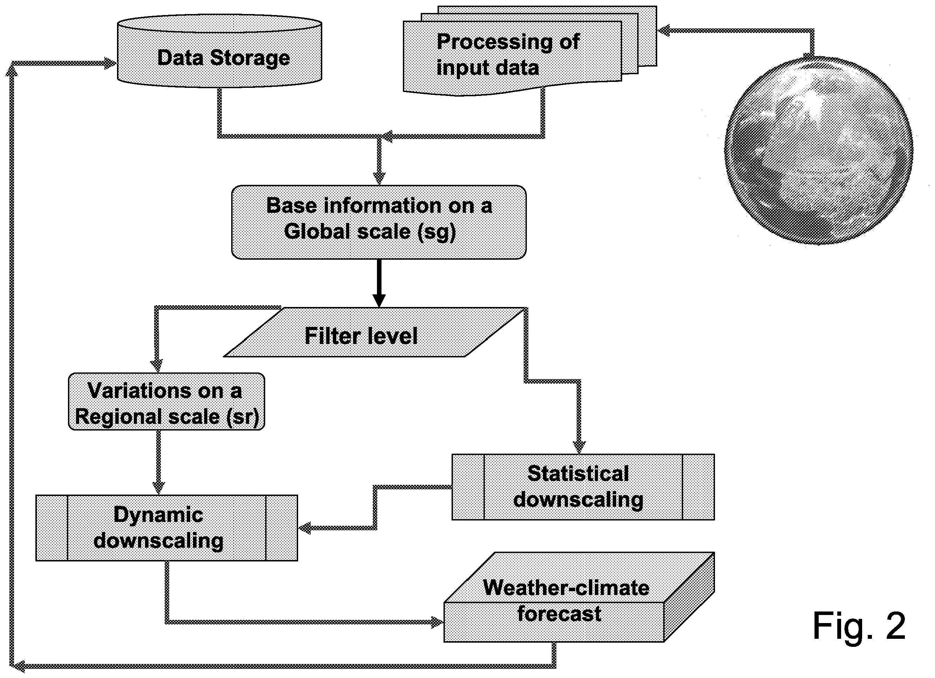

In any case, however, the physics on all the scales is kept in common for each scale and, within the domain, the long waves are free to develop in the regional model. Furthermore, there is no explicit forcing agent towards the global-scale field within the regional domain. At this point, the regional model is still susceptible to large-scale errors. A further filter, also introduced for the first time in the method according to the invention, based on a selective self-corrective procedure, is applied for reducing the latter type of error (figure 2). The selective self-correction inserted in the filter, is based on statistical down-scaling which establishes the application range of the selection procedure and acts as control procedure (benchmark) on the meteorological parameters of the regional area (SR). This therefore ensures that large-scale errors (SG) are corrected, obtaining a down-scaling which is independent of the selection of the position in the domain and meteorological parameters available on the large-scale (SG) geographical area.

In the combination between statistical and dynamic down-scaling, statistical down-scaling is applied to the base field, whereas dynamic down-scaling is applied to variations on a regional scale. In this way, the dynamic-statistical combination respects the conditions described above for the correct evaluation of the waves with different scales, indicating ensemble down-scaling as the composition of the possible undulations on a global and regional scale.

The down-scaling procedure of the method according to the invention, is capable of taking into account the development of processes which take place on a smaller scale and for durations of less than a day, improving the prediction of the temperature close to the ground which can be specifically influenced by the evolution of these interactions on a smaller space-time scale. These effects are therefore added to the global field, integrating some evolutionary aspects with the specific down-scaling particularization process as a combination of the base field, large-scale component of the total field, indicated on a regional scale. This allows the statistical component to be added, which relates the data of the field on a global scale with the regional dynamics and the final result, i.e. the temperature close to the ground.

The combination between dynamics and statistics eliminates potential weaknesses of statistical down-scaling alone, due to the fact that the statistical reports developed today do not necessarily also apply, as such, to the future, and the incompleteness of the data on certain areas. A scaled temperature range is therefore produced on the area of interest, on the basis of the ensemble down-scaling already illustrated above, homogenizing the different space-time scaling, giving the physical process continuity and using the same instruments at each step, with an innovative procedure with respect to the known dynamic-statistic ensemble down-scaling techniques.

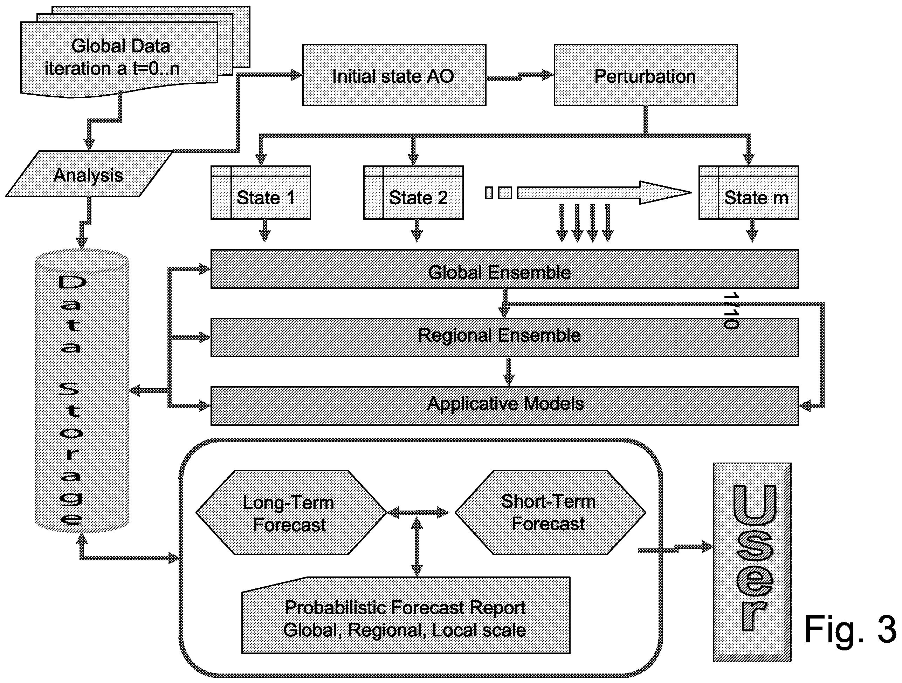

The process, as shown in figure 3, is organized starting from overall data on a global scale (SG), i.e. the state of the weather (weather data revealed). These data serve for the construction of the starting point, i.e. the instant at time = 0 (initial state on a global scale). The datum thus constructed forms the input of the module which generates perturbed states (perturbation process) starting from the initial state. Each of these perturbed states (state 1, state 2, ..., state N) forms the starting point for each of the simulations of the model.

A simulation is produced from each perturbation, for each of the starting states used, which covers the whole reference period. The results are stored and used contemporaneously for simulations on a regional scale (SR) (data storage ↔ regional system) at the base level starting from the control datum. The data of the simulations of the N states stored are the input of the applicative models which effect the down-scaling of seasonal forecasting, through the procedure described hereunder. The data of the processing stored daily in the previous days, together with those of the current day, are used as a whole for constructing an *ensemble* consisting of hundreds of elements. At the end, an overall prediction is produced for the various groups of time scales, for current use according to the requirements of the user, in long-term forecasting and in usual short and medium-term forecasting.

The down-scaling procedure responds to the necessity of providing additional information starting from global forecasting. Regional scale models have been frequently used for down-scaling on a climatic level (for example for studying climatic changes) but rarely applied to seasonal forecasting. The method according to the invention is capable of exceeding any method previously applied, by effecting down-scaling from global forecasting through the combined use of regional models and statistical down-scaling. The latter is based on a mathematical model and an application which uses correlations constructed on a historical basis, thus allowing the model to be linked to the preselected regional domain. The regional model effects the down-scaling for each of the seasonal forecasting periods. Each period consists of different predictions effected in the same period, thus constructing ensembles consisting of hundreds of elements which combine the statistical-dynamical properties of the system.

The results show that the combination between the global *super-ensemble,* dynamic-statistical down-scaling and inclusion of the tendency of the overall ensemble over a specific time period, combined through an application layer which constructs the average values, the confidence range and variability, forms a single and innovative system, capable of providing a continuous forecast over the whole seasonal period, from one to ninety days (figure 3).

A series of applicative examples of the short-medium-long term weather-climate forecasting method according to the invention is provided hereunder. In Western economies, about 20% of PIL can be directly influenced by the weather-climatic conditions and the income of any industry in the agricultural, energy, construction, transport and tourism industries depends on the trend of meteorological variables, in particular the temperature, on which the method according to the invention is focalized. The weather conditions directly influence the volumes, uses and prices of certain goods. An exceptionally hot winter, for example, can leave energy companies with an excess of fuel reserves or, on the contrary, a colder winter creates the necessity of purchasing reserves at extremely high prices. Although the price changes in relation to the demand, price adjustments do not compensate possible losses deriving from an anomalous trend of the weather-climatic conditions. The method according to the invention determines short-, medium- and long-term temperature prediction and confidence, allowing intrinsic risks of the weather-climatic trend to be handled.

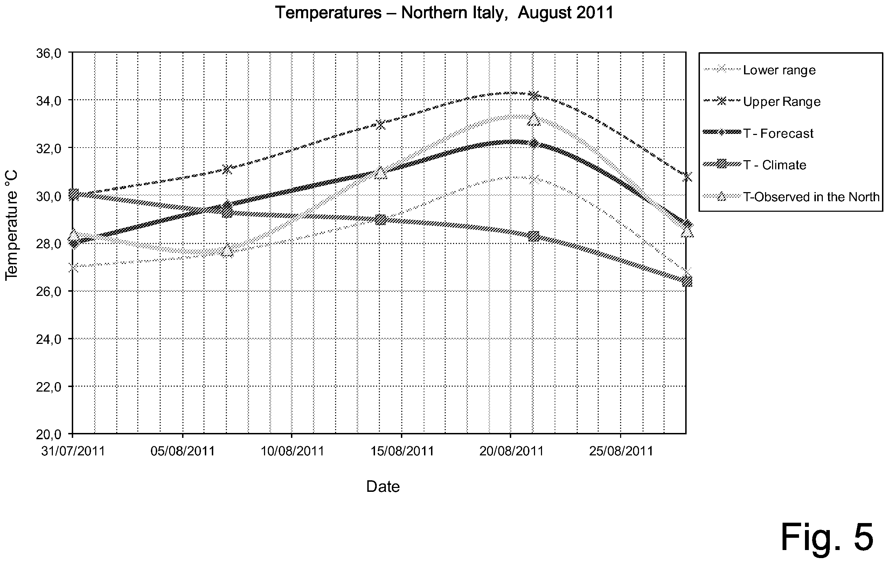

A first application example is the following. Figure 5 represents the forecast produced by the method according to the invention for the month of August 2011 for Northern Italy. The forecast of figure 5 was generated during the previous month. As can be observed from the graph, there is a strong positive thermal anomaly after the first decade of the month that the forecasting method was capable of accurately reproducing, with an average difference in the order of 1°C with respect to the climate forecast, which, on the other hand, has an average difference of 3°C with respect to the final value.

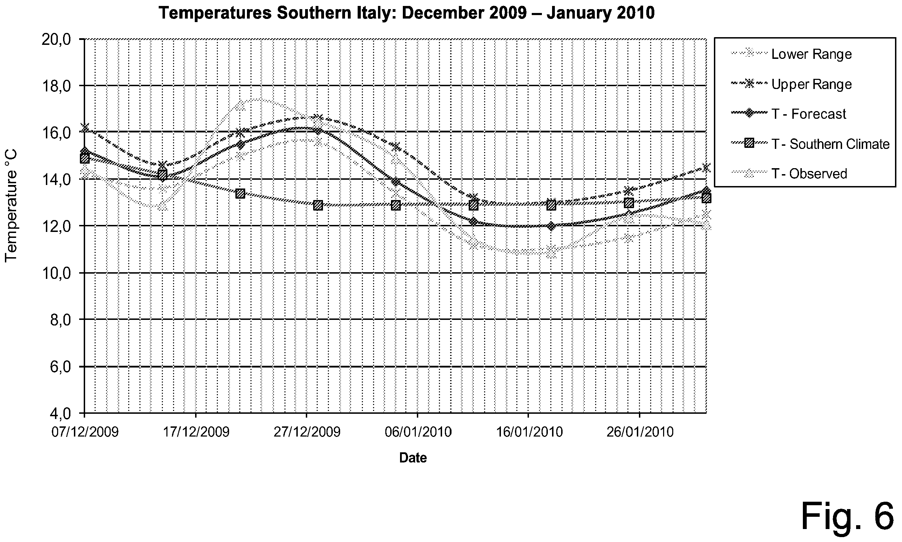

A second application example of the method is indicated in figure 6 for the prediction of the maximum temperature in Southern Italy, excluding the islands, for the months of December 2009 and January 2010. The forecast was effected on the basis of the processes previously described and the basis of the data processed refers to the end of November 2009. The forecasting method correctly reproduces the behaviour of the temperature revealed in Southern Italy. The average variance is 1°C, whereas the difference with respect to the climatic value used as a comparative value is 2.9°C. The method therefore provided an improved prediction of 1.9°C with respect to the forecast based on the climatic values. In both of the applicative examples, the climatic anomalies in the order of 2°C were correctly predicted.

With a knowledge of the weather-climatic trend in advance, a considerable economical advantage can be obtained in terms of both price and volumes of gas. By knowing the temperature trend of a certain geographical area in time, in fact, and paying particular attention to anomalous trends, it is possible to improve the planning of storage reserves, sale and supply of gas.

Another application example of the method according to the invention relates to the prediction of the demand for gas, effected on the composition of residential, commercial, industrial demands and electric energy production. Energy demand is strictly correlated to the seasonal weather-climatic trend and in particular the term *heating degree day* (HDD) or *cooling degree day* (CDD) is used, depending on whether this refers to heating or conditioning. Problems relating to storage and gas reserves also depend on the demand. The balance between reserves and demand minimizes the risk of sudden price increases. High prices in fact correspond to peaks, as in certain cold winters, when the demand exceeds the sum of the production plus what has been accumulated in storage. The reserves themselves play a critical role in satisfying a growing demand. A balanced economic programming however requires an optimization of the quantities of natural gas to be stored. Excesses are costly whereas, on the contrary, an underestimation represents a considerable risk.

In order to evaluate the example of application to this problem of an accurate knowledge of weather-climate forecasting and its impact, the dependence of each element of the demand on the degrees/day and its deviation with respect to the climatology, must be evaluated. In studies effected, the dependence on the degrees/day of the four terms of the demand (residential, commercial, industrial and electricity production) shows a relative insensitivity to the weather conditions for industrial demand, a weak dependence for commercial demand and a significant dependence for demand associated with utilities and for residential demand. In particular, assuming a direct linear relation between the demand for natural gas and HDD (*heating degree day*) in the winter period (November-March), the weight on the dependence on the demand, in the case of a hypothetical variation of 2°C (see figure 3) with respect to the climatological value, would cause:
- an increase in the commercial and residential demand of about 20%;
- an increase in the industrial demand of about 8%; and
- no increase in the utilities demand,
for an overall variation in the order of 10÷15% with respect to the global demand.

In the same way, assuming a direct relation between the CDD (*cooling degree day*) and the demand for natural gas linked to the production of electric energy (utilities) in the summer period, with a variation of one degree with respect to the climatological value, a variation in the overall demand of about 7% can be estimated.

Another application example of the method according to the invention relates to short-term temperature forecasting. The prediction of room temperature is extremely important in predicting the production availability of combined cycle thermoelectric power plants fed with natural gas. The improvement in the prediction of room temperature from day D+1 to day D+5 was estimated by the system to be around 0.5°C hourly average. For a combined cycle power plant of 390 MW, in fact, the room temperature has an impact on the producibility of electric energy of about 2 MWh for each degree centigrade. By improving the temperature forecast by 0.5°C, it is possible to increase the availability of power for each combined cycle by about 1 MW (0.3%) for all the hours of functioning. Furthermore, a better programming of the production of the productive units has a significant economical impact with respect to limiting the costs relating to the payment of unbalance charges generated by the difference between the sale of electric energy in the national electric market and its actual production.

From the point of view of the application of short-term weather-climate forecasting and its impact on the gas market, an improved forecasting of the temperature from day D+1 to D+5 allows a reduction in the error committed in the programming phase of gas offtakes, for both hourly/daily nomination purposes and also for the purposes of weekly programming towards transporters. In particular, an improvement of 0.5°C reduces the daily unbalance of gas offtakes (difference between the volumes programmed and actual offtakes), relating to civil users and consequently a reduction in the relative associated charge, of about 3%.

Furthermore, a reduced temperature forecast error also allows possible unbalances to be managed, with a consequent reduction in penalties for exceeding the capacity, which can be generated on the European market in which the company operates. The operation activities and flexibility on the natural gas market for arbitrage opportunities (infra-month activities - unused capacity) and trading, are consequently improved. An expected variation in the temperature, for example, can cause an expected increase or decrease in the prices of natural gas in hub delivery points.

It can thus be seen that the short-medium-long term weather-climate forecasting method and system according to the present invention achieve the objectives previously indicated.

The short-medium-long term weather-climate forecasting method and system thus conceived can in any case undergo numerous modifications and variants, all included in the same inventive concept. The protection scope of the invention is therefore defined by the enclosed claims.

## Claims

1. Method for a meteorological forecast of temperature, from a short term of about 1 day to a long term of about 90 days, for:
- managing the trade, transport and storage of energy resources such as natural gas, electric energy, oil and refined products;
- estimating the production of electric energy obtained through the combustion of natural gas in combined cycle power plants, improving efficiency and reducing environmental impact;
- reducing the unbalance on the transport and distribution grids of gas and electricity;
- forecasting of the industrial and civil consumptions for managing the storage of oils and refined products, and optimize the logistic of the service stations;
- managing the logistic of materials and personnel in remote worksites related to exploration and production operations, construction of industrial plants or pipelines, in any geographical area;
- optimizing the supply of oils and the industrial petrochemical processes lead by market trends,
the method comprising the steps of:
- acquiring meteorological parameters of a large-scale geographical area (SG) having a predefined extent;
- decomposing the large-scale geographical area (SG) into a base area, which derives from the large-scale geographical area (SG), and into a regional area (SR), wherein the regional area (SR) is defined as the difference between the large-scale geographical area (SG) and the base area;
- determining the temperature close to the ground surface of the base area, starting from the parameters available on the large-scale geographical area (SG), using an empirical-statistical model which is a *statistical down-scaling;*
- determining the tendencies of the meteorological parameters in the regional area (SR), starting from the meteorological parameters available on the large-scale geographical area (SG), using a dynamic numerical model which is a *dynamic down-scaling,*
the method being **characterized in that** it comprises the further step of:
- performing, through an applicative model, an *ensemble down-scaling,* which is a combination of the empirical-statistical model and of the dynamic numerical model, to obtain in continuous, from the short term of about 1 day up to the long term of about 90 days, the temperature forecast close to the ground surface, wherein said applicative model adds a statistical scaling of the data for temperatures close to the surface which are therefore re-assimilated in the regional area (SR) as new temperature values close to the ground surface of the regional area (SR), introducing, during the dynamic down-scaling phase, a range of pseudo-observations, which properly act on the regional area (SR).

2. Method according to claim 1, wherein the tendencies of the variation of the meteorological parameters of the regional area (SR), for each meteorological parameter, are calculated as the differences between the tendencies of meteorological parameters of the large-scale geographical area (SG) and the tendencies of the meteorological parameters of the base area.

3. Method according to claim 1 or 2, also comprising a filtering step, based on a selective self-correction procedure which, through the empirical-statistical model, defines the application range of a selective procedure and acts as a control procedure or benchmark on the meteorological parameters of the regional area (SR), thus assuring to amend the errors on the large-scale geographical area (SG) and obtaining a down-scaling which is independent from the choice of the position of the area and the meteorological parameters available on the large-scale geographical area (SG).

4. Method according to claim 3, also comprising a selection step or procedure, for each time spell, of the temperature available on the large-scale geographical area (SG) through a measurement based on the distance between suitably selected reference values, such a measurement being used to exclude all those values outside the range.

5. Method according to claim 4, also comprising a further calculation step of the overall value on the temperature ranges.

6. Method according to any of the claims 3 to 5, comprising the preliminary step of determining the meteorological parameters suitable for constructing the initial time instant on the large-scale geographical area (SG), which forms the input of the module which generates a plurality of disturbed weather states (state 1, state 2, ..., state N) starting from the initial time instant, each of said disturbed weather states (state 1, state 2, ..., state N) representing the starting point for the combination, or *ensemble down-scaling,* of the empirical-statistical model and of the dynamic numerical model for determining the temperature close to the surface.

7. Method according to claim 6, wherein for each of the disturbed weather states (state 1, state 2, ..., state N) an overall simulation is produced, which is aggregated and covers the whole reference period thank to the selective auto-correction procedure.

8. Method according to claim 7, wherein the results of the simulation are filed in a database and are contemporaneously used for simulations on the regional area (SR) at the base level starting from the control datum, said results forming the input of the empirical-statistical model and/or of the dynamic numerical model to obtain the temperature forecast close to the surface.

9. Method according to one or more preceding claims, wherein the part of the large-scale geographical area (SG) which is determined as a variation of the meteorological parameters on the regional area (SR) has a grid step size ranging from 1 km to 20 km, typically in the order of 10 km.

10. Method according to one or more preceding claims, wherein the meteorological parameter is a temperature value close to the surface which can be used for managing or trading of energetic resources such as natural gas, electric power, oil and refined products and, production of electricity in combined cycle power plant, logistics of exploration and production operations, and construction of industrial plants or pipelines, in any geographical area.

## Patentansprüche

1. Verfahren für eine meteorologische Vorhersage der Temperatur, von einem kurzen Zeitraum von etwa einem Tag bis zu einem langen Zeitraum von etwa 90 Tagen, für:
- Managen des Handels, Transports und Speicherung von Energiequellen, wie beispielsweise natürlichem Gas, elektrischer Energie, Öl und raffinierten Produkten;
- Einschätzung der Produktion der elektrischen Energie, erhalten durch die Verbrennung von natürlichem Gas in kombinierten Zyklus-Kraftwerken, zur Verbesserung der Wirksamkeit und Verminderung der Beeinträchtigung der Umwelt;
- Verminderung des Ungleichgewichts auf dem Transport und Verteilungsraster für Gas und Elektrizität;
- Vorhersage des industriellen und zivilen Verbrauchs für das Managen der Lagerung von Ölen und raffinierten Produkten, und zur Optimierung der Logistik von Service-Stationen;
- Managen der Logistik von Materialien und Personal in abgelegenen Arbeitsstätten, die in Zusammenhang stehen mit der Durchführung von Exploration und Herstellung, der Konstruktion industrieller Werke oder Pipelines, in beliebigen geographischen Gegenden;
- Optimierung der Versorgung mit Ölen und den industriellen petrochemischen Verfahren, folgend den Marktentwicklungen, wobei das Verfahren die Schritte umfasst von:
- Aufnehmen der meteorologischen Parameter eines großflächigen geographischen Bereichs (SG) mit einem vorbestimmten Ausmaß;
- Aufteilen des großflächigen geographischen Bereichs (SG) in einen Basisbereich, der sich von dem großflächigen geographischen Bereich (SG) ableitet, und in einen regionalen Bereich (SR), wobei der regionale Bereich (SR) definiert ist durch die Differenz zwischen dem großflächigen geographischen Bereich (SG) und dem Basisbereich;
- Bestimmung der Temperatur nahe der Bodenoberfläche des Basisbereichs, ausgehend von den für den großflächigen geographischen Bereich (SG) vorhandenen Parametern, unter Verwendung eines empirischen-statistischen Modells, wobei es sich um statistisches Down-Scaling handelt;
- Bestimmung der Entwicklungen der meteorologischen Parameter in dem regionalen Bereich (SR), ausgehend von den für den großflächigen geographischen Bereich (SG) verfügbaren Parametern, unter Verwendung eines dynamischen-numerischen Modells, wobei es sich um ein dynamisches Down-Scaling handelt,
wobei das Verfahren **dadurch gekennzeichnet ist, dass** es die weiterein Schritte umfasst von:
- Durchführen, mittels eines Anwendungsmodells, eines Ensemble-Down-Scalings, wobei es sich um eine Kombination des empirischen-statistischen Modells und des dynamischen-numerischen Modells handelt, um kontinuierlich zu erhalten, für einen kurzen Zeitraum von etwa 1 Tag bis zu einem langen Zeitraum von etwa 90 Tagen, die Temperaturvorhersage nahe zu der Bodenoberfläche, wobei das Anwendungsmodell ein statistisches Scalen der Temperaturdaten nahe der Oberfläche hinzufügt, die deshalb in dem regionalen Bereich (SR) als neue Temperaturwerte nahe der Bodenoberfläche des regionalen Bereichs (SR) aufgenommen werden, Einführen während der dynamischen Down-Scaling-Phase eines Bereichs von Pseudo-Beobachtungen, welche passend auf den regionalen Bereich (SR) einwirken.

2. Verfahren nach Anspruch 1, worin die Entwicklungen der Variation der meteorologischen Parameter des regionalen Bereichs (SR), für jeden meteorologischen Parameter, berechnet werden als Differenz zwischen den Entwicklungen der meteorologischen Parameter des großflächigen geographischen Bereichs (SG) und den Entwicklungen der meteorologischen Parameter des Basisbereichs.

3. Verfahren nach Anspruch 1 oder 2, auch umfassend einen Filtrierungsschritt, basierend auf einem selektiven Selbstkorrektur-Verfahren, das mittels des empirischen-statistischen Modells den Anwendungsbereich eines selektiven Verfahrens definiert, und als ein Kontrollverfahren oder eine Benchmark auf die meteorologischen Parameter des regionalen Bereichs (SR) wirkt, so dass die Veränderung von Fehlern auf dem großflächigen geographischen Bereich (SG) sichergestellt ist, und ein Down-Scaling erhalten wird, das unabhängig ist von der Wahl der Position des Bereichs und der für den großflächigen geographischen Bereich (SG) verfügbaren meteorologischen Parameter.

4. Verfahren nach Anspruch 3, auch umfassend einen Selektionsschritt oder ein Verfahren für jeden Zeitbereich, der für den großflächigen geographischen Bereich (SG) verfügbaren Temperatur durch eine Messung, basierend auf der Distanz zwischen in geeigneter Weise ausgewählten Differenzwerten, so dass eine Messung verwendet wird, die all solche Werte außerhalb des Bereichs ausschließt.

5. Verfahren nach Anspruch 4, auch umfassend eine weiteren Berechnungsschritt des Gesamtwertes auf die Temperaturbereiche.

6. Verfahren nach irgendeinem der Ansprüche 3 bis 5, umfassend den vorläufigen Schritt der Bestimmung der meteorologischen Parameter, die zur Ermittlung des anfänglichen Zeitwerts auf dem großflächigen geographischen Bereich (SG) geeignet sind, der den Input des Moduls bildet, der eine Vielzahl von gestörten Wetterzuständen (Zustand 1, Zustand 2, ..., Zustand N) erzeugt, ausgehend von einem anfänglichen Zeitwert, wobei jeder gestörte Wetterzustand (Zustand 1, Zustand 2, ..., Zustand N) einen Ausgangspunkt für die Kombination darstellt, oder Ensemble-Down-Scaling, des empirischen-statistischen Modells und des dynamischen-numerischen Modells zur Bestimmung der Temperatur nahe der Oberfläche.

7. Verfahren nach Anspruch 6, worin für jeden der gestörten Wetterzustände (Zustand 1, Zustand 2, ..., Zustand N) eine Gesamtsimulation erzeugt wird, die aggregiert ist und die vollständige Referenz-Periode abdeckt, dank des selektiven Auto-Korrektur-Verfahrens.

8. Verfahren nach Anspruch 7, worin die Ergebnisse der Simulation in eine Datenbasis eingebracht und zugleich für Simulationen für den regionalen Bereich (SR) am Basislevel verwendet werden, ausgehend von dem Kontrolldatum, wobei die Ergebnisse den Input für das empirische-statistische Modell und/oder das dynamische-numerische Modell bilden, um die Temperaturvorhersage nahe der Oberfläche zu erhalten.

9. Verfahren nach einem oder mehreren vorhergehenden Ansprüchen, worin der Teil des großflächigen geographischen Bereichs (SG), der als eine Variation der meteorologischen Parameter auf dem regionalen Bereich (SR) bestimmt wird, eine Gitterschrittgröße in einem Bereich von 1 km bis 20 km hat, typischerweise in einem Bereich von 10 km.

10. Verfahren nach einem oder mehreren vorhergehenden Ansprüchen, worin der meteorologische Parameter ein Temperaturwert nahe der Oberfläche ist, der zum Managen von oder zum Handeln mit energetischen Ressourcen verwendet werden kann, wie beispielsweise natürlichem Gas, elektrischer Kraft, Öl und raffinierten Produkten, und Herstellung von Elektrizität in kombiniertem Zyklus-Kraftwerk, Logistik von Exploration und Herstellungsoperationen und Konstruktion von industriellen Werken oder Pipelines, in beliebigen geographischen Bereichen.

## Revendications

1. Procédé de prévision météorologique de températures, depuis un court terme d'environ 1 jour jusqu'à un long terme d'environ 90 jours, pour :
- la gestion du commerce, du transport et du stockage de ressources énergétiques telles que le gaz naturel, l'énergie électrique, le pétrole et des produits raffinés ;
- l'estimation de la production d'énergie électrique obtenue par la combustion de gaz naturel dans des centrales à cycle combiné, améliorant l'efficacité et réduisant l'incidence sur l'environnement ;
- la réduction du déséquilibre dans les réseaux de transport et de distribution de gaz et d'électricité ;
- la prévision des consommations industrielles et civile pour la gestion du stockage de pétrole et de produits raffinés, et l'optimisation de la logistique des stations-service ;
- la gestion de la logistique des matériels et du personnel dans des sites de travail dans des régions éloignées, en rapport avec des opérations d'exploration et de production, la construction d'installations industrielles ou de pipelines, dans tout type de zone géographique ;
- l'optimisation de l'approvisionnement en pétrole et en processus pétrochimiques industriels influencés par les tendances du marché,
le procédé comprenant les étapes suivantes :
- l'acquisition de paramètres météorologiques d'une zone géographique étendue (SG) ayant une superficie prédéfinie ;
- la décomposition de la zone géographique étendue (SG) en une zone de base, qui est issue de la zone géographique étendue (SG), et une zone régionale (SR), où la zone régionale (SR) est définie comme étant la différence entre la zone géographique étendue (SG) et la zone de base ;
- la détermination de la température à proximité de la surface du sol de la zone de base, en partant des paramètres disponibles sur la zone géographique étendue (SG), en utilisant un modèle empirique-statistique qui est une descente d'échelle statistique ;
- la détermination des tendances des paramètres météorologiques dans la zone régionale (SR), à partir des paramètres météorologiques disponibles sur la zone géographique étendue (SG), en utilisant un modèle numérique dynamique qui est une descente d'échelle dynamique, le procédé étant **caractérisé en ce qu'**il comprend l'étape supplémentaire suivante :
- la réalisation, à travers un modèle applicatif, d'une descente d'échelle d'ensemble, qui est une combinaison du modèle empirique-statistique et du modèle numérique dynamique, pour obtenir en continu, depuis le court terme d'environ 1 jour jusqu'au long terme d'environ 90 jours, les prévisions de températures à proximité de la surface du sol,
sachant que ledit modèle applicatif ajoute une mise à l'échelle statistique des données pour des températures à proximité de la surface, qui sont ainsi réassimilées dans la zone régionale (SR) en tant que nouvelles valeurs de températures à proximité de la surface du sol de la zone régionale (SR), avec introduction, pendant la phase de descente d'échelle dynamique, d'une gamme de pseudo-observations qui agissent normalement sur la zone régionale (SR).

2. Procédé selon la revendication 1, selon lequel les tendances de la variation des paramètres météorologiques de la zone régionale (SR), pour chaque paramètre météorologique, sont calculées en tant que différences entre les tendances de paramètres météorologiques de la zone géographique étendue (SG) et les tendances des paramètres météorologiques de la zone de base.

3. Procédé selon la revendication 1 ou 2, comprenant également une étape de filtrage, basée sur une procédure d'autocorrection sélective qui, à travers le modèle empirique-statistique, définit le champ d'application d'une procédure sélective et agit comme une procédure de contrôle ou une référence sur les paramètres météorologiques de la zone régionale (SR), garantissant ainsi la correction des erreurs pour la zone géographique étendue (SG) et aboutissant à une descente d'échelle qui est indépendante du choix de la position de la zone et des paramètres météorologiques disponibles sur la zone géographique étendue (SG).

4. Procédé selon la revendication 3, comprenant également une étape ou procédure de sélection, pour chaque laps de temps, de la température disponible sur la zone géographique étendue (SG), par le biais d'une mesure basée sur la distance entre des valeurs de référence sélectionnées de façon appropriée, une telle mesure étant utilisée pour exclure toutes les valeurs situées à l'extérieur de la plage.

5. Procédé selon la revendication 4, comprenant également une étape supplémentaire de calcul de la valeur globale sur les plages de température.

6. Procédé selon l'une quelconque des revendications 3 à 5, comprenant l'étape préliminaire de détermination des paramètres météorologiques adaptés pour construire l'instant initial sur la zone géographique étendue (SG), qui constitue l'entrée du module générant une pluralité d'états météorologiques perturbés (état 1, état 2, ..., état N) en partant de l'instant initial, chacun desdits états météorologiques perturbés (état 1, état 2, ..., état N) représentant le point de départ pour la combinaison, ou la descente d'échelle d'ensemble, du modèle empirique-statistique et du modèle numérique dynamique pour déterminer la température à proximité de la surface.

7. Procédé selon la revendication 6, selon lequel on produit pour chacun des états météorologiques perturbés (état 1, état 2, ..., état N) une simulation globale qui est agrégée et couvre la totalité de la période de référence, grâce à la procédure d'autocorrection sélective.

8. Procédé selon la revendication 7, selon lequel les résultats de la simulation sont enregistrés dans une base de données et sont utilisés ponctuellement pour des simulations sur la zone régionale (SR) au niveau de base, en partant de la donnée de contrôle, lesdits résultats constituant l'entrée du modèle empirique-statistique et/ou du modèle numérique dynamique, pour obtenir la prévision de températures à proximité de la surface.

9. Procédé selon une ou plusieurs des revendications précédentes, selon lequel la partie de la zone géographique étendue (SG) qui est déterminée en tant que variation des paramètres météorologiques sur la zone régionale (SR) présente une dimension de maille de réseau comprise dans la plage allant de 1 km à 20 km, typiquement de l'ordre de 10 km.

10. Procédé selon une ou plusieurs des revendications précédentes, selon lequel le paramètre météorologique est une valeur de température à proximité de la surface qui peut être utilisée pour la gestion ou le commerce de ressources énergétiques telles que le gaz naturel, l'énergie électrique, le pétrole et des produits raffinés, et la production d'électricité dans des centrales à cycle combiné, la logistique des opérations d'exploration et de production et la construction d'installations industrielles ou de pipelines, dans tout type de zone géographique.
